# FASCICULE DE BREVET EUROPEEN

(11) **EP 1 531 069 B1**
(45) Date de publication et mention de la délivrance du brevet: **17.10.2007**
(21) Numéro de dépôt: 04027157.9
(22) Date de dépôt: 16.11.2004
(51) Int. Cl.: B60H 1/00

(54) **Installation de climatisation modulaire**
Modular aufgebaute Klimaanlage
Modular air conditioning device

(30) Priorité: 17.11.2003 DE 10353666
(43) Date de publication de la demande: 18.05.2005
(73) Titulaire: Valeo Klimasysteme GmbH, 96476 Rodach (DE)
(72) Inventeur: Fuhrmann, Lutz, 96479 Weitramsdorf (DE)
(74) Mandataire: Lemaire, Marc

(56) Documents cités:
- US-A- 5 737 936
- PATENT ABSTRACTS OF JAPAN vol. 2000, no. 04, 31 août 2000 (2000-08-31) & JP 2000 006640 A (ZEXEL CORP), 11 janvier 2000 (2000-01-11)
- PATENT ABSTRACTS OF JAPAN vol. 1999, no. 12, 29 octobre 1999 (1999-10-29) & JP 11 180130 A (SUZUKI MOTOR CORP), 6 juillet 1999 (1999-07-06)

## Description

La présente invention concerne un carter de conduite de ventilation pour une installation de chauffage et ventilation et/ou une installation de climatisation, en particulier pour un véhicule automobile, le carter de conduite de ventilation comportant au moins deux parties, qui sont doivent venir en prise de manière étanche l'une avec l'autre par l'intermédiaire de zones d'extrémité, comme il est décrit dans le préambule de la revendication 1 indépendante. L'invention concerne également un procédé de montage desdites au moins deux parties, comme il est décrit dans le préambule de la revendication 12 indépendante.

Au moment de la conception d'un carter de conduite de ventilation, l'homme du métier doit tenir compte de différentes fonctions ; en particulier, il faut que le carter de conduite de ventilation assure un guidage sans fuite des flux d'air acheminés sinon des bruits gênants et des tourbillons indésirables risqueraient d'apparaître. De plus, le carter de conduite de ventilation doit être facile à fabriquer à moindre coût et, en outre, il doit permettre une maintenance simple du système de climatisation. De ce fait, jusqu'à présent, dans l'état de la technique, les carters de guidage d'air pour les installations de chauffage, de ventilation et/ou de climatisation sont conçus de préférence sensiblement sous forme de pièce d'un seul tenant.

Dans les carters de guidage d'air connus par l'état de la technique, un inconvénient est que, au cours de la fabrication ou au cours du montage, il est toujours nécessaire de traiter le dispositif complet, formé par le carter du système de chauffage et de climatisation et par le carter de la ventilation. Un autre inconvénient est la complexité des moules de moulage par injection pour ces carters de chauffage et de climatisation, étant donné que des directions de démoulage différentes sont souvent nécessaires pour la partie ventilation et la partie chauffage et climatisation.
Le document JP-A-2000-006640 montre un carter de conduite telle que décrit dans le préambule de la première revendication.

L'objectif de l'invention est donc de proposer un carter de conduite de ventilation qui, d'une part, permet un montage et une fabrication rapide et simple/flexible et qui, d'autre part, améliore les conditions de maintenance d'une installation de chauffage, de ventilation et/ou de climatisation. L'invention a en outre pour objectif de proposer un procédé de montage du carter de conduite de ventilation.

Cet objectif est résolu par les caractéristiques de la revendication indépendante, des modes de réalisation améliorés judicieux étant exposés par les caractéristiques des revendications dépendantes.

La présente invention propose plus particulièrement un carter de conduite de ventilation pour une installation de chauffage, de ventilation et/ou de climatisation, en particulier pour un véhicule automobile, le carter de conduite de ventilation comportant au moins deux parties doivent venir en prise l'une avec l'autre par l'intermédiaire de leurs zones d'extrémité correspondantes, chaque zone d'extrémité définissant sensiblement au moins deux plans écartés l'un de l'autre, les parties étant amenées en prise par un mouvement de translation dans une direction qui est sensiblement orthogonale aux vecteurs normaux des plans, qui sont définis par les zones d'extrémité desdites parties.

En principe, un homme du métier, compétent dans le domaine des installations de ventilation, de chauffage et/ou de climatisation, a tendance à prévoir le moins de zones de jonction possible dans la construction du carter de conduite de ventilation, pour remédier aux inconvénients ci-dessus mentionnés. Cela s'applique en particulier lorsque le lieu de montage de l'installation est exposé à de fortes vibrations, telles que celles générées dans le véhicule automobile, étant donné que dans celui-ci des forces relativement élevées de torsion et de cisaillement s'exercent sur les plans de jonction ou d'assemblage et lesdites forces peuvent également provoquer la formation de zones de fuite indésirables, voire des ruptures.

Grâce à la conception proposée pour les plans d'assemblage, sensiblement en forme de gradins, il est possible de manière étonnamment simple de répartir sur différents plans actifs les forces appliquées et de diminuer ainsi les forces générées localement et donc de minimiser également le risque de fuite et d'améliorer dans l'ensemble la stabilité malgré plusieurs plans d'assemblage.

Il en résulte en plus une géométrie auto-stabilisante face aux torsions qui, contrairement aux surfaces aboutées planes et parallèles, est sensiblement immobile en rotation. Cela est important en particulier pour l'utilisation dans un véhicule automobile.

Par l'invention proposée ici, une installation de chauffage, de ventilation et/ou de climatisation peut être décomposée maintenant de manière simple en plusieurs modules quelconques, de telle sorte que, au cours de la fabrication, chaque module de l'installation peut être monté dans une partie correspondante du carter de conduite de ventilation et seulement au moment du montage final, les différentes parties du carter de conduite de ventilation sont assemblées comme il est proposé ici. En outre, en cas de panne au niveau d'une partie de l'installation de climatisation, il est possible de démonter simplement la partie du carter concernée avec le module de climatisation défectueux sans qu'il soit nécessaire d'ouvrir la totalité du carter de conduite de ventilation.

De manière avantageuse, les plans écartés l'un de l'autre sont disposés sensiblement parallèlement l'un à l'autre. Il en résulte une géométrie particulièrement simple et une répartition avantageuse des forces exercées sur un carter selon l'invention.

De manière avantageuse, lesdites au moins deux parties comportent chacune des dispositifs de guidage correspondants, qui permettent en particulier de réaliser l'engagement entre les parties. Pour une fabrication rapide et reproductible, il est avantageux de mettre à disposition du monteur un tel auxiliaire de montage. De ce fait, la partie correspondante du carter de conduite de ventilation peut être positionnée rapidement et avec précision.

Par ailleurs, il est avantageux que les dispositifs de guidage comportent un assemblage à rainure et languette. Un assemblage à rainure et languette constitue, d'une part, un guidage simple pour l'engagement des deux parties et une immobilisation en torsion des deux parties et, d'autre part, peut être réalisé sur le plan de la construction de manière simple et à moindre coût. En outre, la présence de zones se chevauchant dans un assemblage à rainure et languette permet de garantir un faible risque de fuite.

De manière avantageuse, les dispositifs de guidage comportent des moyens d'étanchéité. A titre d'exemple, il est possible de prévoir une lèvre d'étanchéité ou élément similaire au niveau des surfaces entrant en prise, afin d'augmenter et de garantir l'étanchéité en fonction des besoins. Une garniture d'étanchéité conçue de manière correspondante peut en outre être conçue sous forme d'élément d'amortissement pour amortir par exemple les vibrations générées en cas d'utilisation dans un véhicule.

En outre, il est avantageux que les moyens d'étanchéité comportent une garniture à labyrinthe. Un assemblage à rainure et languette peut être conçu de manière simple sous forme de garniture à labyrinthe, étant donné que seules les surfaces engagées doivent être agrandies de manière correspondante.

Dans un mode de réalisation préféré, les zones d'extrémité définissent au moins un plan supplémentaire, qui est disposé sensiblement perpendiculairement entre lesdits au moins deux plans des zones d'extrémité. Dans ce mode de réalisation, on obtient une géométrie particulièrement avantageuse par rapport à la stabilité en rotation. Il en résulte des surfaces de jonction correspondantes qui facilitent davantage le montage.

Par ailleurs, il est avantageux qu'au moins un dispositif de guidage et/ou un dispositif d'étanchéité supplémentaire soit prévu, qui s'étend dans le plan supplémentaire. Ainsi, les différentes parties du carter peuvent être bloquées avec précision dans une position définie également dans la zone entre les plans et une étanchéité nécessaire est ainsi obtenue.

En outre, il est avantageux qu'au moins un dispositif d'étanchéité ou de guidage supplémentaire comporte un assemblage à rainure et languette. Il est ainsi possible de garantir sensiblement sur tout le tracé de l'assemblage entre les deux parties du carter un engagement par chevauchement particulièrement avantageux desdites deux parties. La fonction d'étanchéité peut également être assurée par la conception de l'assemblage à rainure et languette sous forme de garniture à labyrinthe ou avec des moyens d'étanchéité supplémentaires, tels qu'une lèvre d'étanchéité ou un joint élastomère.

Par ailleurs, il est avantageux que des moyens de fixation pour une sollicitation réciproque soient prévus au niveau des deux parties du carter de conduite de ventilation. De ce fait, il est possible, après le positionnement des deux parties du carter, de solliciter en précontrainte les assemblages à rainure et languette. Cela améliore non seulement l'étanchéité, mais aussi la stabilité des assemblages et, de ce fait, de l'installation selon l'invention. En outre, la fixation au moyen de plusieurs assemblages vissés par exemple agit de manière à inhiber la torsion.

De manière avantageuse, les moyens de fixation sont sensiblement centrés par rapport aux plans, en particulier par rapport au plan supplémentaire. Il en résulte une répartition particulièrement avantageuse des forces exercées sur les surfaces en prise.

Dans un mode de réalisation avantageux, il est prévu de monter un module de ventilation dans une partie du carter de conduite de ventilation et un module de distribution dans une autre partie. Le module de ventilation nécessite une dépense de montage relativement élevée, de telle sorte que, dans le cas présent, avec la subdivision de la chaîne de fabrication, on peut obtenir un gain de temps particulièrement avantageux. Dans un autre mode de réalisation, le module de distribution comporte, en plus, aussi une unité d'échange thermique, de telle sorte qu'ici également on peut effectuer un montage préalable complet.

En outre, il est avantageux que le carter de conduite de ventilation soit réalisé par un procédé de moulage par injection. Un procédé de moulage par injection est une possibilité simple et à coûts avantageux de réaliser des pièces en matière plastique. En plus, les parties selon l'invention du carter de conduite de ventilation peuvent être moulées par injection séparément dans la présente invention, de telle sorte que la complexité des moules de moulage par injection peut également être réduite.

En particulier, la présente invention propose en outre un procédé de montage d'un carter de conduite de ventilation décrit, le procédé comprenant les étapes suivantes :
a) une pose en alignement desdites au moins deux parties et
b) un mouvement de translation dans une direction qui est sensiblement orthogonale aux vecteurs normaux des deux plans.

Ce procédé permet d'appliquer tous les avantages ci-dessus mentionnés d'un carter de conduite de ventilation selon l'invention. Les deux parties sont tout d'abord agencées en étant alignée l'une avec l'autre, les différentes parties pouvant être manipulées relativement facilement en raisson de leurs dimensions, de telle sorte que la pose en alignement peut aussi être effectuée par un seul monteur. Les deux parties, à savoir les parties du carter de conduite de ventilation, peuvent alors être amenées par coulissement dans leur position finale.

De manière avantageuse, l'étape de la pose en alignement comporte une étape d'insertion desdites au moins deux parties. L'insertion des deux parties du carter permet de diminuer davantage la dépense de montage, étant donné qu'après l'insertion, le guidage des deux parties est assuré, de telle sorte qu'un gauchissement entre les deux parties peut être évité.

En outre, il est avantageux de prévoir une étape d'assemblage/blocage desdites au moins deux parties. Cela permet, d'une part, de garantir que les deux parties du carter de conduite de ventilation restent en prise de manière étanche l'une avec l'autre même en cours de service, pendant lequel peuvent être générées des vibrations en partie élevées. D'autre part, l'utilisation de moyens d'assemblage par conjugaison de force permet de définir une répartition prédéterminée des forces générées, celles-ci étant par exemple compensées par des renforcements locaux du matériau ou étant absorbées par des moyens d'amortissement. Un assemblage ou blocage peut être effectué par exemple par des assemblages vissés ou des assemblages collés. Toutefois, il serait aussi envisageable de former des moyens de blocage correspondants contre les parties du carter.

D'autres caractéristiques et avantages de l'invention sont davantage mis en évidence par la lecture de la description ci-après, uniquement à titre d'exemple et non limitative, d'un mode de réalisation préféré qui est expliqué par référence aux dessins annexés, parmi lesquels :
la figure 1 représente un détail d'une partie d'un carter de conduite de ventilation selon l'invention, dans la conception sous forme de module de distribution ;
la figure 2 illustre des parties conçues selon l'invention d'un carter de conduite de ventilation sous la forme d'un module de ventilateur et d'un module de distribution d'une installation de climatisation ;
la figure 3 représente un détail des parties du carter de conduite de ventilation selon la figure 2.

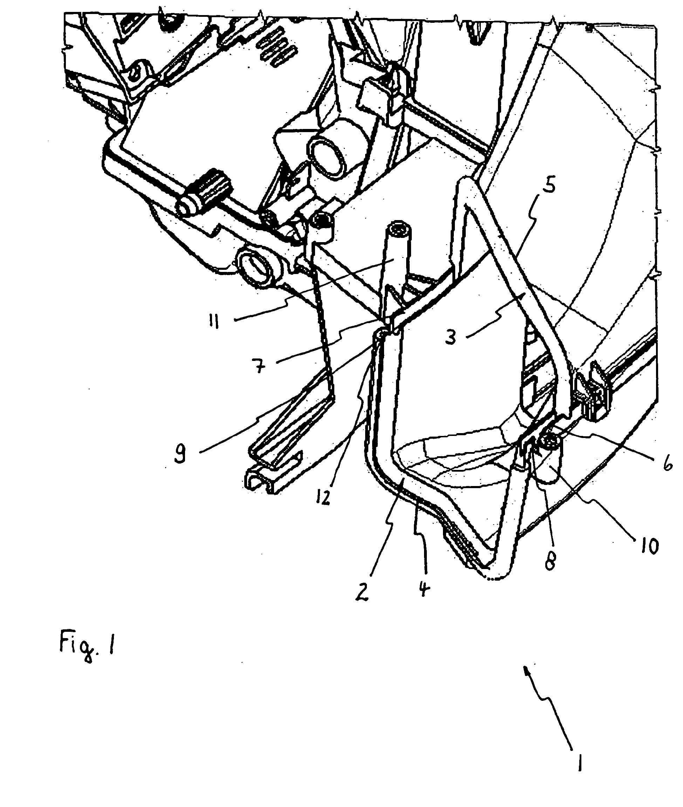

La figure 1 représente un détail d'une partie d'un carter de conduite de ventilation selon l'invention, sous la forme d'un module de distribution 1. Contre le module de distribution 1 est agencé un module de ventilation non représenté sur la figure 1.

Sont bien visibles sur la figure 1 deux plans 2, 3, écartés l'un de l'autre et réalisés au niveau du module de distribution 1. En outre, les plans 2, 3 sont conçus différemment l'un de l'autre, l'un des plans 2 comporte une rainure 4, dans laquelle peut être introduite la languette concernée d'une zone d'extrémité correspondante du module de ventilation. Le deuxième plan 3 est conçu sous forme de languette 5, qui peut être introduite dans la rainure correspondante de la zone d'extrémité du module de ventilation.

Dans la zone entre les deux plans 2, 3 du module de ventilation 1 s'étendent deux plans supplémentaires 6, 7, qui sont prévus perpendiculairement aux plans 2, 3. Lesdits plans sont également munis chacun d'une rainure 8, 9, dans laquelle peuvent être insérées les languettes correspondantes de la partie formant le carter de ventilation. Les assemblages à rainure et languette des deux parties du carter sont conçus de telle sorte que ceux-ci constituent une garniture à labyrinthe.

Dans les zones des assemblages à rainure et languette sont disposés en outre des joints élastomères non représentés, qui peuvent en plus être destinés à compenser les tolérances de fabrication.

Contre le module de distribution 1, représenté sur la figure 1, sont formés en outre des manchons de réception 10, 11, 12, pour permettre un vissage avec la partie formant le carter du ventilateur non représenté sur la figure 1.

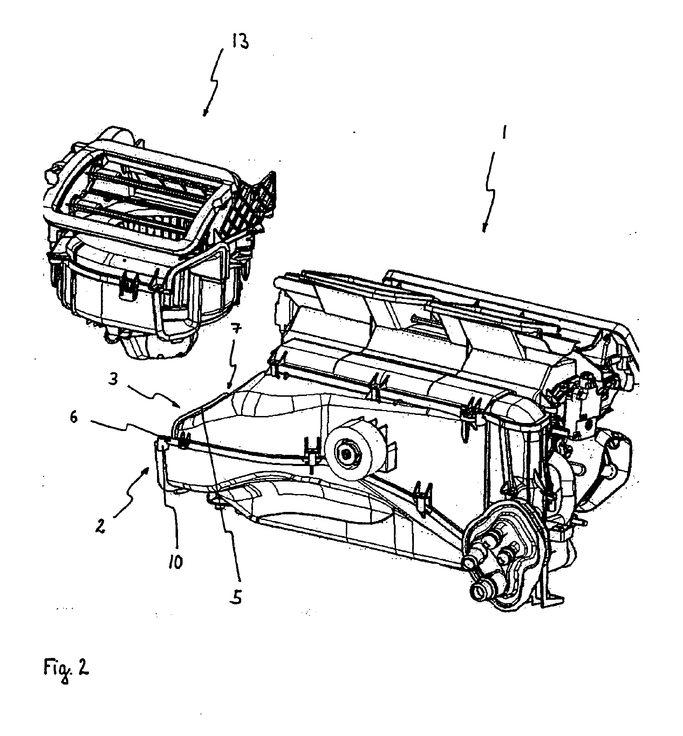

La figure 2 représente des parties d'un carter de conduite de ventilation, conçues selon l'invention, sous la forme d'un module de ventilation 13 et d'un module de distribution 1 d'une installation de climatisation, qui est montée dans un véhicule automobile.

Les parties du carter 1, 13, représentées sur la figure 2, sont agencées l'une par rapport à l'autre de telle sorte que pour les assembler il suffit de les faire coulisser parallèlement l'une vers l'autre.

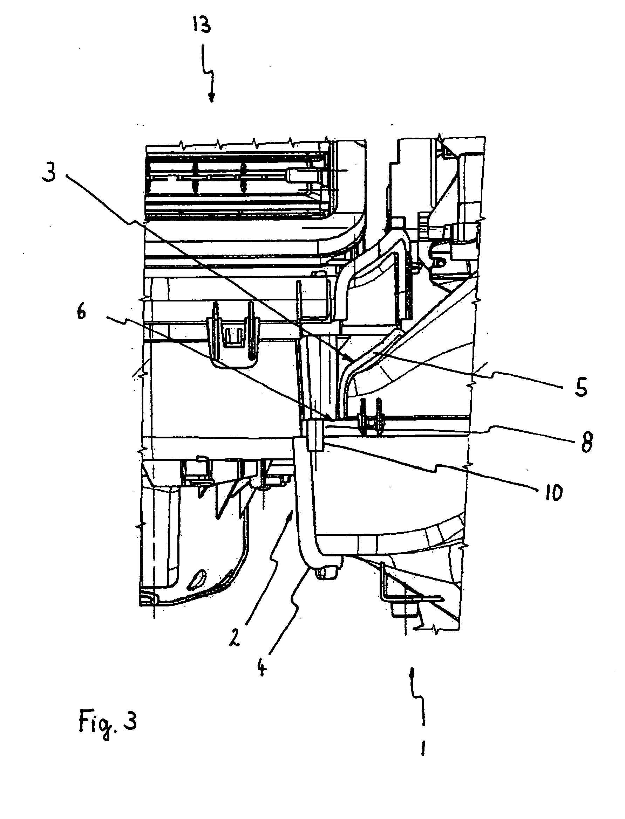

La figure 3 représente un détail des parties du carter de conduite de ventilation selon la figure 2 pendant le processus d'assemblage. Sur la figure 3, les parties du carter 1, 13 sont déjà insérées partiellement l'une dans l'autre, sachant que sur cette représentation après l'insertion des deux parties, un guidage est déjà permis par l'assemblage à rainure et languette, qui empêche une torsion des deux parties l'une par rapport à l'autre pendant la jonction.

Sur la figure 3, il est particulièrement visible la manière dont les plans formés de manière appropriée contre les parties du carter 1, 13 peuvent agir en interaction entre eux et comment il se forme un tracé d'assemblage sensiblement en forme de gradins.

Pour l'assemblage des deux parties du carter 1, 13, le monteur doit, au cours d'une première étape, positionner les deux parties 1, 13, plus précisément les plans 2, 3 correspondants, l'un au-dessus de l'autre. Le monteur peut par exemple positionner le module de distribution 1 sur une surface de pose et lever le module de ventilation 13 au-dessus du module de distribution 1 et positionner les plans 2, 3 correspondants l'un au-dessus de l'autre.

Ensuite, le monteur insère les deux parties l'une dans l'autre par les assemblages à rainure et languette appropriés, les assemblages à rainure et languette fournissant alors un guidage qui facilite le déplacement consécutif des deux parties l'une vers l'autre.

Enfin, les parties du carter 1, 13 sont déplacées dans la direction des plans 6, 7 jusqu'à ce que les parties de carter 1, 13 prennent appui sur des plans 6, 7 correspondants et s'insèrent dans les assemblages à rainure et languette prévus perpendiculairement aux plans 2, 3.

Au cours d'une dernière étape, les deux parties du carter 1, 13 sont vissées sous tension, de telle sorte que les deux parties 1, 13 entrent en prise sensiblement de manière étanche l'une avec l'autre.

Dans une application appropriée, le monteur peut aussi prévoir des moyens d'étanchéité supplémentaires ou des moyens d'amortissement au niveau des surfaces de contact pour amortir les vibrations élevées éventuellement générées.

Au cours d'une éventuelle opération de maintenance ou lors d'un remplacement d'une installation de chauffage, de ventilation et/ou de climatisation équipée d'un carter selon l'invention, il est possible de laisser par exemple le module de distribution 1 dans le véhicule et de démonter uniquement le module de ventilation 13 et d'effectuer sur celui-ci les travaux d'entretien ou de le remplacer.

En conclusion, il convient de remarquer que le concept selon l'invention, à l'encontre des concepts utilisés jusqu'à présent, se fonde sur l'idée de réaliser un carter de conduite de ventilation en plusieurs parties pour l'installation de chauffage, de ventilation et/ou de climatisation et d'utiliser une partie de carter indépendante pour chaque module de l'installation et de créer malgré tout un engagement sensiblement stable en torsion et étanche entre les différentes parties du carter ou parties de l'installation.

En général, la présente solution permet de réaliser une installation de chauffage, de ventilation et/ou de climatisation dans des étapes de fabrication parallèles. En outre, on a aussi la possibilité d'utiliser des parties de carter identiques pour une large gamme d'installations différentes, ainsi on peut utiliser par exemple pour différentes installations un seul module de distribution de construction identique, des raccords non nécessaires pouvant être obturés de manière étanche au moyen d'une partie de carter en forme de collerette.

Bien que la présente invention ait été entièrement décrite en priorité en référence à un mode de réalisation préféré, l'homme du métier devrait constater que différentes possibilités de modification dans le cadre des revendications annexées sont possibles sans s'écarter du concept selon l'invention et de la protection revendiquée. L'homme du métier constatera plus particulièrement que les plans définis entre les plans ne sont pas nécessairement orthogonaux à ceux-ci, mais peuvent aussi former un angle différent avec une application correspondante. En outre, l'homme du métier connaît, outre les assemblages vissés connus, des moyens de blocage pour la fixation des parties du carter de conduite de ventilation dans la position finale, sachant qu'une précontrainte avantageuse peut être fournie par l'assemblage à rainure et languette. Par ailleurs, l'homme du métier compétent dans le domaine des assemblages à rainure et languette peut aussi prévoir d'autres moyens d'étanchéité pour améliorer si nécessaire encore davantage l'étanchéité.

## Revendications

1. Carter de conduite de ventilation pour une installation de chauffage, de ventilation et/ou de climatisation, en particulier pour un véhicule automobile, le carter de conduite de ventilation comportant au moins deux parties (1, 13), qui doivent venir en prise de manière étanche l'une avec l'autre par l'intermédiaire de zones d'extrémité, **caractérisé en ce que** chaque zone d'extrémité définit au moins deux plans (2, 3) écartés l'un de l'autre, les parties étant mises en prise par un mouvement de translation dans une direction qui est sensiblement orthogonale aux vecteurs normaux des plans (2, 3), qui sont définis par les zones d'extrémité des parties (1, 13).

2. Carter de conduite de ventilation selon la revendication 1, **caractérisé en ce que** les plans (2, 3) écartés l'un de l'autre sont agencés sensiblement parallèlement l'un à l'autre.

3. Carter de conduite de ventilation selon la revendication 1 ou 2, **caractérisé en ce que** lesdites au moins deux parties (1, 13) comportent chacune des dispositifs de guidage correspondants, qui permettent en particulier l'engagement desdites parties.

4. Carter de conduite de ventilation selon la revendication 3, **caractérisé en ce que** les dispositifs de guidage comportent un assemblage à rainure et languette (4, 5).

5. Carter de conduite de ventilation selon la revendication 4, **caractérisé en ce que** les dispositifs de guidage comportent des moyens d'étanchéité, en particulier des lèvres d'étanchéité.

6. Carter de conduite de ventilation selon la revendication 4 ou 5, **caractérisé en ce que** les moyens d'étanchéité comportent une garniture à labyrinthe.

7. Carter de conduite de ventilation selon l'une quelconque des revendications 1 à 6, **caractérisé en ce que** les zones d'extrémité définissent au moins un plan supplémentaire (6, 7), qui s'étend sensiblement perpendiculairement entre lesdits au moins deux plans (2, 3) des zones d'extrémité.

8. Carter de conduite de ventilation selon l'une quelconque des revendications 1 à 7, **caractérisé en ce qu**'il est prévu au moins un dispositif de guidage et/ou un dispositif d'étanchéité supplémentaires, qui s'étend sensiblement dans le plan supplémentaire (6, 7).

9. Carter de conduite de ventilation selon la revendication 8, **caractérisé en ce que** ledit au moins un dispositif d'étanchéité et/ou de guidage supplémentaire comporte un assemblage à rainure et languette (8, 9).

10. Carter de conduite de ventilation selon l'une quelconque des revendications 1 à 9, **caractérisé en ce que** des moyens de fixation (10, 11, 12) pour une sollicitation réciproque sont prévus contre les deux parties du carter de conduite de ventilation.

11. Carter de conduite de ventilation selon la revendication 10, **caractérisé en ce que** les moyens de fixation (10, 11, 12) sont disposés sensiblement au centre par rapport aux plans (2, 3), en particulier dans le plan supplémentaire.

12. Carter de conduite de ventilation selon l'une quelconque des revendications 1 à 11, **caractérisé en ce qu**'un module de ventilation (13) est prévu dans une partie du carter de conduite de ventilation et un module de distribution (1) est prévu dans une autre partie.

13. Carter de conduite de ventilation selon l'une quelconque des revendications 1 à 12, **caractérisé en ce que** le carter de conduite de ventilation est réalisé au moyen d'un procédé de moulage par injection.

14. Procédé de montage d'un carter de conduite de ventilation, qui est conçu selon l'une quelconque des revendications 1 à 13, **caractérisé en ce que** le procédé comprend les étapes suivantes :
a) une pose en alignement desdites au moins deux parties (1, 13) et
b) un mouvement de translation dans une direction qui est sensiblement orthogonale aux vecteurs normaux des deux plans (2, 3).

15. Procédé selon la revendication 14, **caractérisé en ce que** l'étape de la pose en alignement comporte une étape d'insertion desdites au moins deux parties (1, 13).

16. Procédé selon la revendication 14 ou 15, **caractérisé en ce qu**'il est prévu une étape d'assemblage/blocage desdites au moins deux parties (1, 13).

## Claims

1. Ventilation duct casing for a heating, ventilation and/or air conditioning installation, in particular for a motor vehicle, which ventilation duct casing comprises at least two parts (1, 13), which must be held together in a sealed manner by means of end zones, **characterised in that** each end zone defines at least two planes (2, 3) spaced apart from one another, wherein the parts are held together by a translation movement in a direction that is substantially orthogonal to the normal vectors of the planes (2, 3), which are defined by the end zones of the parts (1, 13).

2. Ventilation duct casing according to claim 1, **characterised in that** the planes (2, 3) spaced apart from one another are arranged substantially parallel to one another.

3. Ventilation duct casing according to claim 1 or 2, **characterised in that** said at least two parts (1, 13) each comprise corresponding guide devices, which in particular enable the engagement of said parts.

4. Ventilation duct casing according to claim 3, **characterised in that** the guide devices comprise a tongue-and-groove joint (4, 5).

5. Ventilation duct casing according to claim 4, **characterised in that** the guide devices comprise sealing means, in particular sealing lips.

6. Ventilation duct casing according to claim 4 or 5, **characterised in that** the sealing means comprise a labyrinth seal.

7. Ventilation duct casing according to any one of claims 1 to 6, **characterised in that** the end zones define at least one additional plane (6, 7) that extends substantially perpendicularly between said at least two planes (2, 3) of the end zones.

8. Ventilation duct casing according to any one of claims 1 to 7, **characterised in that** at least one additional guide device and/or sealing device is provided, which extends substantially in the additional plane (6, 7).

9. Ventilation duct casing according to claim 8, **characterised in that** said at least one additional sealing and/or guide device comprises a tongue-and-groove joint (8, 9).

10. Ventilation duct casing according to any one of claims 1 to 9, **characterised in that** the attachment means (10, 11, 12) for reciprocal stress are provided against the two parts of the ventilation duct casing.

11. Ventilation duct casing according to claim 10, **characterised in that** the attachment means (10, 11, 12) are arranged substantially in the centre with respect to the planes (2, 3), in particular in the additional plane.

12. Ventilation duct casing according to any one of claims 1 to 11, **characterised in that** a ventilation module (13) is provided in a part of the ventilation duct casing and a distribution module (1) is provided in another part.

13. Ventilation duct casing according to any one of claims 1 to 12, **characterised in that** the ventilation duct casing is made by means of an injection moulding process.

14. Method for assembly of a ventilation duct casing, which is designed according to any one of claims 1 to 13, **characterised in that** the method includes the following steps:
a) positioning in alignment of said at least two parts (1, 13) and
b) a translation movement in a direction substantially orthogonal to the normal vectors of the two planes (2, 3).

15. Method according to claim 14, **characterised in that** the alignment positioning step comprises a step of inserting said at least two parts (1, 13).

16. Method according to claim 14 or 15, **characterised in that** a step of assembling/locking of said two parts (1, 13) is provided.

## Patentansprüche

1. Lüftungsgehäuse für eine Heiz-, Lüftungs- und/oder Klimaanlage, insbesondere für ein Kraftfahrzeug, wobei das Lüftungsgehäuse aus mindestens zwei Teilen (1, 13) besteht, die über Endbereiche dichtschließend miteinander verbunden werden müssen, **dadurch gekennzeichnet, dass** jeder Endbereich mindestens zwei in einem bestimmten Abstand zueinander befindliche Ebenen (2, 3) bildet, wobei die Verbindung zwischen den beiden Teilen durch eine Translationsbewegung in einer Richtung erfolgt, die weitgehend orthogonal zu den normalen Vektoren der von den Endbereichen der Teile (1, 13) gebildeten Ebenen (2,3) ist.

2. Lüftungsgehäuse nach Anspruch 1, **dadurch gekennzeichnet, dass** die zwei in einem bestimmten Abstand zueinander befindliche Ebenen (2, 3) weitgehend parallel zueinander ausgerichtet sind.

3. Lüftungsgehäuse nach Anspruch 1 oder 2, **dadurch gekennzeichnet, dass** die zwei Teile (1, 13) jeweils entsprechende Führungsvorrichtungen besitzen, die insbesondere das Ansetzen der Teile ermöglichen.

4. Lüftungsgehäuse nach Anspruch 3, **dadurch gekennzeichnet, dass** die Führungsvorrichtungen eine Baugruppe aus Nut und Fuge (4, 5) besitzen.

5. Lüftungsgehäuse nach Anspruch 4, **dadurch gekennzeichnet, dass** die Führungsvorrichtungen Mittel zum Abdichten und insbesondere Dichtlippen besitzen.

6. Lüftungsgehäuse nach Anspruch 4 oder 5, **dadurch gekennzeichnet, dass** die Mittel zum Abdichten eine Labyrinthdichtung besitzen.

7. Lüftungsgehäuse nach einem der Ansprüche 1 bis 6, **dadurch gekennzeichnet, dass** die Endbereiche mindestens eine zusätzliche Ebene (6, 7) bilden, die weitgehend senkrecht zu den mindestens zwei Ebenen (2, 3) der Endbereiche verläuft.

8. Lüftungsgehäuse nach einem der Ansprüche 1 bis 7, **dadurch gekennzeichnet, dass** mindestens eine zusätzliche Führungsvorrichtung und /oder Abdichtvorrichtung vorgesehen ist, die weitgehend auf der zusätzlichen Ebene (6, 7) verläuft.

9. Lüftungsgehäuse nach Anspruch 8, **dadurch gekennzeichnet, dass** die mindestens eine zusätzliche Führungsvorrichtung und /oder Abdichtvorrichtung eine Baugruppe aus Nut und Fuge (8, 9) besitzt.

10. Lüftungsgehäuse nach einem der Ansprüche 1 bis 9, **dadurch gekennzeichnet, dass** Befestigungsmittel (10, 11, 12) mit gegenseitiger Beanspruchung an den beiden Teile des Lüftungsgehäuses vorgesehen sind.

11. Lüftungsgehäuse nach Anspruch 10, **dadurch gekennzeichnet, dass** die Befestigungsmittel (10, 11, 12) weitgehend zentral in Bezug auf die Ebenen (2, 3) und insbesondere die zusätzliche Ebene angeordnet sind.

12. Lüftungsgehäuse nach einem der Ansprüche 1 bis 11, **dadurch gekennzeichnet, dass** in einem Teil des Lüftungsgehäuses ein Lüftungsmodul (13) und in einem anderen Teil ein Verteilungsmodul (1) vorgesehen sind.

13. Lüftungsgehäuse nach einem der Ansprüche 1 bis 12, **dadurch gekennzeichnet, dass** die Herstellung des Lüftungsgehäuses nach einem Einspritzformenverfahren erfolgt.

14. Verfahren zum Einbauen eines nach den Ansprüchen 1 bis 13 ausgelegten Lüftungsgehäuses, **dadurch gekennzeichnet, dass** das Verfahren aus folgenden Schritten besteht:
a) Ausrichten der mindestens zwei Teile (1, 13) aufeinander und
b) Translationsbewegung in einer Richtung, die weitgehend orthogonal zu den normalen Vektoren der beiden Ebenen (2, 3) ist.

15. Verfahren nach Anspruch 14, **dadurch gekennzeichnet, dass** der Schritt des Ausrichtens der beiden Teile aufeinander einen Schritt des Einfügens der mindestens zwei Teile (1, 13) beinhaltet.

16. Verfahren nach Anspruch 14 oder 15, **dadurch gekennzeichnet, dass** dabei ein Schritt des Zusammenbau/Blockierens der mindestens zwei Teile (1, 13) vorgesehen ist.
